# EUROPEAN PATENT APPLICATION

(11) **EP 4 851 839 A1**
(43) Date of publication of application: **09.12.2026**
(21) Application number: 24922308.2
(22) Date of filing: 30.01.2024
(51) Int. Cl.: G06F 21/60

(54) **SERVICE PROVISION SYSTEM AND SERVICE PROVISION METHOD**

(71) Applicant: Chiyoda Corporation, Kanagawa 220-8765 (JP)
(72) Inventor: YONEYAMA, Toru, Yokohama-shi Kanagawa 220-8765 (JP)
(74) Representative: Gulde & Partner
(86) International application number: PCT/JP2024/002926
(87) International publication number: WO 2025/163768

(57) **Abstract**

A service provision system and a service provision method capable of solving a problem caused by a plurality of customer users belonging to one management group are provided. The service provision system provides a facility management support service to a customer user. The service provision system comprises: a first management group assigning unit that assigns a first management group accessible by a first customer user to the first customer user; a second management group assigning unit that assigns a second management group accessible by a second customer user to the second customer user; a first application associating unit that associates a first application generated according to an instruction from the first customer user with the first management group; a second application associating unit that associates a second application generated according to an instruction from the second customer user with the second management group; a first data acquiring unit that acquires first data related to construction, operation, or maintenance of a first managed facility managed by the first customer user, and causes a first storage unit associated with the first management group to store the first data; and a second data acquiring unit that acquires second data related to construction, operation, or maintenance of a second managed facility managed by the second customer user, and causes a second storage unit associated with the second management group to store the second data. The first application is capable of executing a process related to the facility management support service based on the first data stored in the first storage unit, and the second application is capable of executing a process related to the facility management support service based on the second data stored in the second storage unit.

## Description

### Technical Field

The present invention relates to a service provision system and a service provision method.

### Background Art

A cloud service provision system that provides a service such as software (an application) to a user via a network is known. The user can use the service provided by the cloud service provision system from a client terminal by preparing a certain environment including the client terminal such as a PC (personal computer), a Web browser running on the client terminal, and an Internet connection environment.

There is a case where an organization such as a company contracts the service provided by such a cloud service provision system, and members of the organization use the service as customer users. As one form thereof, there is a system that provides a facility management support service to the customer user. This facility management support service is a service that performs state analysis, deterioration diagnosis, and the like of various facilities (equipment) used in, for example, a machine factory, a steel plant, or the like managed by the customer user, by installing in advance a vibration sensor that detects vibration of the facility, an acoustic sensor that detects sound of the facility, a temperature sensor that detects temperature of the facility, and the like for the facility, and executing an application using detection data and the like detected by the various sensors.

Conventionally, in a cloud service provision system that provides a facility management support service to a customer user, a plurality of customer users are invited to one management group (for example, called a tenant), and the plurality of customer users are allowed to access and use the same application within the management group. In this case, the customer user (an employee of a company or the like) belongs to the management group, and an administrator who performs management within the management group is set in the management group. For example, a technique for reducing time and effort of an administrator required for work of assigning access authority to each user belonging to a management group has been devised (see, for example, Patent Literature 1).

### Citation List

### Patent Literature

[Patent Literature 1] Japanese Unexamined Patent Application Publication No. 2019-036141

### Summary of Invention

### Technical Problem

However, in the cloud service provision system that provides the facility management support service to the plurality of customer users belonging to one management group, there have been problems that, for example, it is difficult to customize the application for each customer user, and that as a result of a plurality of pieces of data related to facilities respectively managed by the plurality of customer users being mixed, leakage (contamination) of the data (confidential information) due to a provider of the service incorrectly linking customer data or the like may occur.

An object of the present invention is to provide a service provision system and a service provision method capable of solving a problem caused by a plurality of customer users belonging to one management group.

### Solution to Problem

According to the present invention, a service provision system having the following configuration is provided.
[1] A service provision system that provides a facility management support service to a customer user, comprising: a first management group assigning unit that assigns a first management group accessible by a first customer user to the first customer user; a second management group assigning unit that assigns a second management group accessible by a second customer user to the second customer user; a first application associating unit that associates a first application generated according to an instruction from the first customer user with the first management group; a second application associating unit that associates a second application generated according to an instruction from the second customer user with the second management group; a first data acquiring unit that acquires first data related to construction, operation, or maintenance of a first managed facility managed by the first customer user, and causes a first storage unit associated with the first management group to store the first data; and a second data acquiring unit that acquires second data related to construction, operation, or maintenance of a second managed facility managed by the second customer user, and causes a second storage unit associated with the second management group to store the second data, wherein the first application is capable of executing a process related to the facility management support service based on the first data stored in the first storage unit, and the second application is capable of executing a process related to the facility management support service based on the second data stored in the second storage unit.
   According to the present invention, the first application generated according to an instruction from the first customer user is associated with the first management group, and the second application generated according to an instruction from the second customer user is associated with the second management group, so that an application can be customized for each customer user. Further, the first data related to the construction, the operation, or the maintenance of the first managed facility managed by the first customer user is stored in the first storage unit associated with the first management group, and the second data related to the construction, the operation, or the maintenance of the second managed facility managed by the second customer user is stored in the second storage unit associated with the second management group, so that it is possible to prevent occurrence of leakage of such data as a result of mixing of a plurality of pieces of data related to facilities respectively managed by a plurality of customer users. From the above, it is possible to solve a problem of the prior art caused by a plurality of customer users belonging to one management group.
   Hereinafter, various embodiments of the present invention will be exemplified. The embodiments shown below can be combined with each other.
[2] The service provision system according to [1], further comprising: a common management group assigning unit that assigns a common management group accessible by the customer user to the customer user; and a common application associating unit that associates a common application accessible by the customer user with the common management group, wherein the common application is capable of executing a process related to the facility management support service based on data related to construction, operation, or maintenance of a managed facility.
[3] The service provision system according to [2], wherein the first application is different from the common application in a configuration of a display screen of an application or setting of an anomaly threshold of the managed facility.
[4] The service provision system according to any one of [1] to [3], wherein administrators of the first and second management groups are providers of the facility management support service.
[5] The service provision system according to [4], further comprising: a first access authority granting unit that grants the first customer user access authority to the first management group, the first application, or the first data based on an instruction from the provider of the facility management support service, wherein the first access authority granting unit grants the access authority corresponding to a security label set for each type of the first data or each type of an execution result of the first application to the first customer user.
[6] The service provision system according to [5], wherein the security label is set corresponding to an area of the first managed facility related to the first data or the execution result of the first application, or corresponding to work details of construction, operation, or maintenance.
[7] The service provision system according to any one of [1] to [6], further comprising: a first output unit that outputs an execution result of the first application to a first terminal device used by the first customer user; and a second output unit that outputs an execution result of the second application to a second terminal device used by the second customer user.
[8] The service provision system according to any one of [1] to [7], wherein the first data acquiring unit acquires, as the first data, only data necessary for executing the first application among data that is related to construction, operation, or maintenance of the first managed facility and that is stored in a first data storage unit managed by the first customer user.
[9] A service provision method for providing a facility management support service to a customer user, comprising: assigning a first management group accessible by a first customer user to the first customer user; assigning a second management group accessible by a second customer user to the second customer user; associating a first application generated according to an instruction from the first customer user with the first management group; associating a second application generated according to an instruction from the second customer user with the second management group; acquiring first data related to construction, operation, or maintenance of a first managed facility managed by the first customer user, and causing a first storage unit associated with the first management group to store the first data; acquiring second data related to construction, operation, or maintenance of a second managed facility managed by the second customer user, and causing a second storage unit associated with the second management group to store the second data, wherein the first application is capable of executing a process related to the facility management support service based on the first data stored in the first storage unit, and the second application is capable of executing a process related to the facility management support service based on the second data stored in the second storage unit.

According to the present invention, it is possible to solve the problem caused by a plurality of customer users belonging to one management group.

### Brief Description of Drawings

FIG. 1 is a block diagram showing a configuration of a service provision system according to an embodiment of the present invention.
FIG. 2 is a block diagram showing a hardware configuration of a server in the present embodiment.
FIG. 3 is a block diagram showing a hardware configuration of a first terminal device in the present embodiment.
FIG. 4 is a block diagram showing a hardware configuration of a second terminal device in the present embodiment.
FIG. 5 is a block diagram showing a hardware configuration of a management terminal device in the present embodiment.
FIG. 6 is a block diagram showing an example of a functional configuration of the server in the present embodiment.
FIG. 7 is a diagram showing an example of a management group in the present embodiment.
FIG. 8 is a flowchart showing an example of common management group assigning processing according to the embodiment of the present invention.
FIG. 9 is a flowchart showing an example of first management group assigning processing according to the embodiment of the present invention.
FIG. 10 is a flowchart showing an example of second management group assigning processing according to the embodiment of the present invention.
FIG. 11 is a flowchart showing an example of first application execution processing according to the embodiment of the present invention.
FIG. 12 is a flowchart showing an example of second application execution processing according to the embodiment of the present invention.

### Description of Embodiments

Embodiments of the present invention will be described with reference to the accompanying drawings. In each drawing, components denoted by the same reference numerals have the same or similar configurations.

### (Configuration of Service Provision System 1)

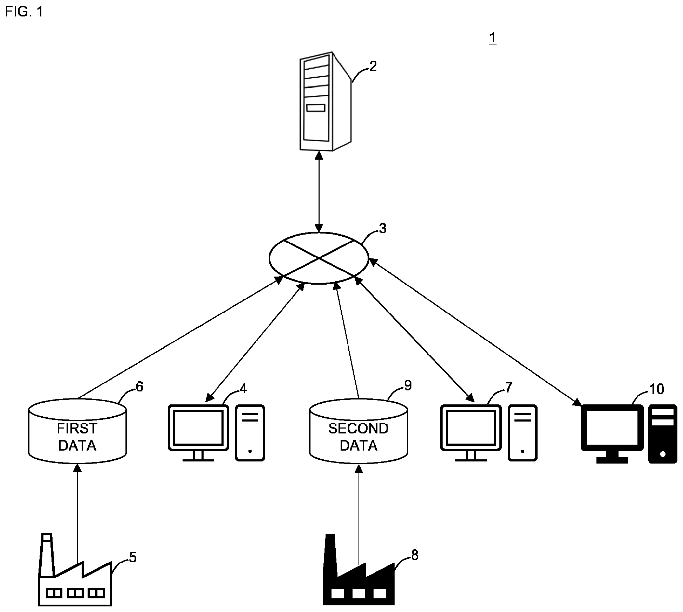

FIG. 1 shows a configuration of a service provision system 1 in the present embodiment. The service provision system 1 shown in FIG. 1 provides a facility management support service (data analysis, facility diagnosis, facility management, visualization service) such as software (an application) to a customer user. The customer user can use the facility management support service provided by the service provision system 1 from a terminal device by preparing a certain environment including the terminal device such as a PC (personal computer), a Web browser running on the terminal device, and an Internet connection environment.

The service provision system 1 shown in FIG. 1 comprises a server 2, a first terminal device 4, a first plant 5, a first data storage unit 6, a second terminal device 7, a second plant 8, a second data storage unit 9, and a management terminal device 10. The server 2 and the first terminal device 4, the first data storage unit 6, the second terminal device 7, the second data storage unit 9, and the management terminal device 10 are communicably connected to each other via a communication line 3 such as the Internet, an intranet, a wireless LAN, or mobile communication.

In the present embodiment, customer users using the first terminal device 4 and the second terminal device 7 are respectively assumed to be a first customer user U1 (for example, an employee belonging to a company A) and a second customer user U2 (for example, an employee belonging to a company B). When it is not necessary to distinguish the first customer user U1 and the second customer user U2 from each other, the first customer user U1 and the second customer user U2 are respectively expressed as a customer user U.

Further, when it is not necessary to distinguish the first terminal device 4 and the second terminal device 7 from each other, the first terminal device 4 and the second terminal device 7 are respectively expressed as a terminal device.

Note that the number of terminal devices provided in the service provision system 1 is not limited to two, and it is sufficient that at least two or more terminal devices are provided.

The server 2 is a device having a function of providing the facility management support service to the customer user U. The server 2 may be configured by one or a plurality of information processing devices, or may be configured using a virtual server (such as a cloud server).

The first terminal device 4 is an information processing terminal, for example, a PC (personal computer), and delivers the facility management support service offered by the server 2 to the first customer user U1 via a display screen. The first customer user U1 can log in to the facility management support service and use the facility management support service by operating the first terminal device 4. As the first terminal device 4, any terminal such as a notebook PC or a personal digital assistant (PDA) may be used.

The first plant 5 is, for example, a machine factory, a steel plant, or the like managed by the first customer user U1. For various facilities (equipment) used in the first plant 5, a vibration sensor that detects vibration of the facility, an acoustic sensor that detects sound of the facility, a temperature sensor that detects temperature of the facility, and the like are installed in advance. The first plant 5 corresponds to a "first managed facility" in the present invention.

The first data storage unit 6 is a database that stores first data, which is data related to construction, operation, or maintenance of the first plant 5. Examples of data related to the construction of the first plant 5 include data related to construction status at the time of initial construction of the first plant 5, construction state (such as acceptability of a welding state), and the like. Examples of data related to the operation of the first plant 5 include data (such as temperature and pressure) of an operating state of the first plant 5 detected by various sensors, data related to operational know-how, and the like. Examples of data related to the maintenance of the first plant 5 include data of a facility deterioration state of the first plant 5 detected by various sensors, inspection record data, an inspection cycle, a maintenance work execution record, and the like. Further, examples of data related to the construction, operation, or maintenance of the first plant 5 also include entry and exit data of a worker and a work vehicle (such as heavy machinery, a robot, or a drone) to and from the managed facility, and their location information data within the managed facility, and data related to the worker's background, qualifications, or training received. The first data may be detection data detected by various sensors installed in the various facilities (equipment) used in the first plant 5, may be customer input data input by the first customer user U1, or may be pre-stored information (information such as specifications or identification numbers of equipment and facilities of the first plant 5) recorded at a time of design or construction of the first plant 5.

The second terminal device 7 is an information processing terminal, for example, a PC (personal computer), and delivers the facility management support service offered by the server 2 to the second customer user U2 via a display screen. The second customer user U2 can log in to the facility management support service and use the facility management support service by operating the second terminal device 7. As the second terminal device 7, any terminal such as a notebook PC or a personal digital assistant (PDA) may be used.

The second plant 8 is, for example, a machine factory, a steel plant, or the like managed by the second customer user U2. For various facilities (equipment) used in the second plant 8, a vibration sensor that detects vibration of the facility, an acoustic sensor that detects sound of the facility, a temperature sensor that detects temperature of the facility, and the like are installed in advance. The second plant 8 corresponds to a "second managed facility" in the present invention.

The second data storage unit 9 is a database that stores second data, which is data related to construction, operation, or maintenance of the second plant 8. Examples of data related to the construction of the second plant 8 include data related to construction status at the time of initial construction of the second plant 8, construction state (such as acceptability of a welding state), and the like. Examples of data related to the operation of the second plant 8 include data (such as temperature and pressure) of an operating state of the second plant 8 detected by various sensors, data related to operational know-how, and the like. Examples of data related to the maintenance of the second plant 8 include data of a facility deterioration state of the second plant 8 detected by various sensors, inspection record data, an inspection cycle, a maintenance work execution record, and the like. Further, examples of data related to the construction, operation, or maintenance of the second plant 8 also include entry and exit data of a worker and a work vehicle (such as heavy machinery, a robot, or a drone) to and from the managed facility, and their location information data within the managed facility, and data related to the worker's background, qualifications, or training received. The second data may be detection data detected by various sensors installed in the various facilities (equipment) used in the second plant 8, may be customer input data input by the second customer user U2, or may be pre-stored information (information such as specifications or identification numbers of equipment and facilities of the second plant 8) recorded at a time of design or construction of the second plant 8.

The management terminal device 10 is an information processing terminal, for example, a PC (personal computer), and is a terminal device capable of performing various settings necessary for providing the facility management support service to the first customer user U1 and the second customer user U2. A service providing user who is the provider of the facility management support service can log in to the facility management support service and perform various setting operations necessary for providing the facility management support service to the first customer user U1 and the second customer user U2 by operating the management terminal device 10. As the management terminal device 10, any terminal such as a notebook PC or a personal digital assistant (PDA) may be used.

### (Hardware Configuration of Server 2)

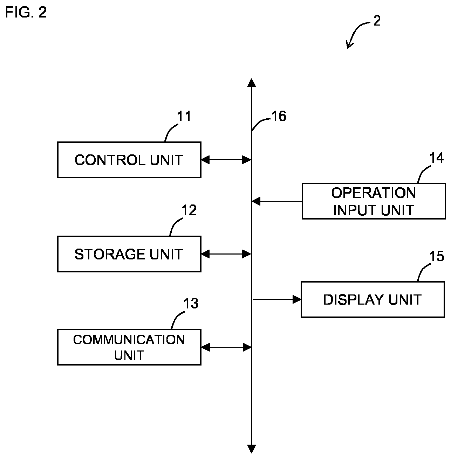

FIG. 2 is a block diagram showing a hardware configuration of the server 2 in the present embodiment. As shown in FIG. 2, the server 2 is configured to comprise a control unit 11, a storage unit 12, a communication unit 13, an operation input unit 14, and a display unit 15.

The control unit 11 is, for example, a CPU (Central Processing Unit), a microprocessor, a DSP (Digital Signal Processor), or the like, and controls the overall operation of the server 2.

A part of the storage unit 12 is composed of, for example, a RAM (Random Access Memory), a DRAM (Dynamic Random Access Memory), or the like, and is used as a work area or the like during execution of processes based on various programs by the control unit 11.

Further, a part of the storage unit 12 is, for example, a nonvolatile memory such as a ROM (Read Only Memory) or an HDD (Hard Disk Drive), and saves various data, programs used for processing of the control unit 11, and the like. The storage unit 12 is capable of holding a database including one or more tables and the like for recording various information, processing results, and the like.

The programs stored in the storage unit 12 include, for example, an OS (Operating System) for realizing basic functions of the server 2, a driver for controlling various hardware, a program for realizing various functions, and the like.

The communication unit 13 is, for example, a NIC (Network Interface Controller), and has a function of connecting to the communication line 3. Note that the communication unit 13 may have a function of connecting to a wireless LAN (Local Area Network), a function of connecting to a wireless WAN (Wide Area Network), for example, a function of enabling short-range wireless communication such as Bluetooth (registered trademark), infrared communication, or the like, instead of the NIC or together with the NIC. The server 2 is connected to the first terminal device 4, the first data storage unit 6, the second terminal device 7, the second data storage unit 9, and the management terminal device 10 via the communication line 3, and can transmit and receive various data to and from the first terminal device 4, the first data storage unit 6, the second terminal device 7, the second data storage unit 9, and the management terminal device 10.

The operation input unit 14 is composed of a keyboard, a mouse, and the like, and receives inputs of various operations by a user using the server 2. The display unit 15 is, for example, a liquid crystal display device or the like, and displays various images.

The control unit 11, the storage unit 12, the communication unit 13, the operation input unit 14, and the display unit 15 are electrically connected to each other via a system bus 16. Therefore, the control unit 11 can access the storage unit 12, display images on the display unit 15, grasp an operation state of the operation input unit 14 by the user, access various communication networks, the first terminal device 4, the first data storage unit 6, the second terminal device 7, the second data storage unit 9, and the management terminal device 10 via the communication unit 13, and the like.

### (Hardware Configuration of First Terminal Device 4)

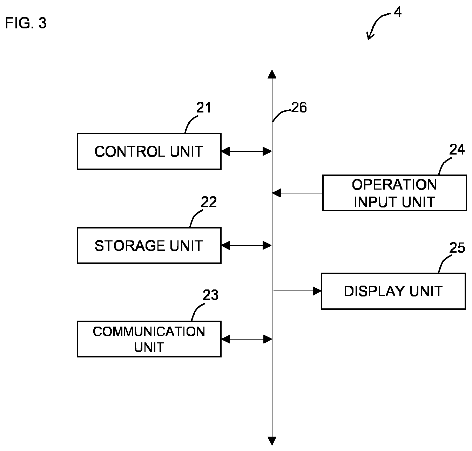

FIG. 3 is a block diagram showing a hardware configuration of the first terminal device 4 in the present embodiment. As shown in FIG. 3, the first terminal device 4 is configured to comprise a control unit 21, a storage unit 22, a communication unit 23, an operation input unit 24, and a display unit 25.

The control unit 21 is, for example, a CPU (Central Processing Unit), a microprocessor, a DSP (Digital Signal Processor), or the like, and controls the overall operation of the first terminal device 4.

A part of the storage unit 22 is composed of, for example, a RAM (Random Access Memory), a DRAM (Dynamic Random Access Memory), or the like, and is used as a work area or the like during execution of processes based on various programs by the control unit 21.

Further, a part of the storage unit 22 is, for example, a nonvolatile memory such as a ROM (Read Only Memory) or an HDD (Hard Disk Drive), and saves various data, programs used for processing of the control unit 21, and the like. The storage unit 22 is capable of holding a database including one or more tables and the like for recording various information, processing results, and the like.

The programs stored in the storage unit 22 include, for example, an OS (Operating System) for realizing basic functions of the first terminal device 4, a driver for controlling various hardware, a program for realizing various functions, and the like.

The communication unit 23 is, for example, a NIC (Network Interface Controller), and has a function of connecting to the communication line 3. Note that the communication unit 23 may have a function of connecting to a wireless LAN (Local Area Network), a function of connecting to a wireless WAN (Wide Area Network), for example, a function of enabling short-range wireless communication such as Bluetooth (registered trademark), infrared communication, or the like, instead of the NIC or together with the NIC. The first terminal device 4 is connected to the server 2 and the like via the communication line 3, and can transmit and receive various data to and from the server 2 and the like.

The operation input unit 24 is composed of a keyboard, a mouse, and the like, and receives inputs of various operations by the first customer user U1 using the first terminal device 4. The display unit 25 is, for example, a liquid crystal display device or the like, and displays various images.

The control unit 21, the storage unit 22, the communication unit 23, the operation input unit 24, and the display unit 25 are electrically connected to each other via a system bus 26. Therefore, the control unit 21 can access the storage unit 22, display images on the display unit 25, grasp an operation state of the operation input unit 24 by the first customer user U1, access various communication networks and the server 2 via the communication unit 23, and the like.

### (Hardware Configuration of Second Terminal Device 7)

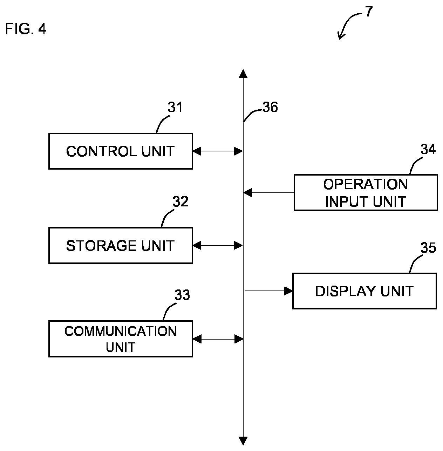

FIG. 4 is a block diagram showing a hardware configuration of the second terminal device 7 in the present embodiment. As shown in FIG. 4, the second terminal device 7 is configured to comprise a control unit 31, a storage unit 32, a communication unit 33, an operation input unit 34, and a display unit 35.

The control unit 31 is, for example, a CPU (Central Processing Unit), a microprocessor, a DSP (Digital Signal Processor), or the like, and controls the overall operation of the second terminal device 7.

A part of the storage unit 32 is composed of, for example, a RAM (Random Access Memory), a DRAM (Dynamic Random Access Memory), or the like, and is used as a work area or the like during execution of processes based on various programs by the control unit 31.

Further, a part of the storage unit 32 is, for example, a nonvolatile memory such as a ROM (Read Only Memory) or an HDD (Hard Disk Drive), and saves various data, programs used for processing of the control unit 31, and the like. The storage unit 32 is capable of holding a database including one or more tables and the like for recording various information, processing results, and the like.

The programs stored in the storage unit 32 include, for example, an OS (Operating System) for realizing basic functions of the second terminal device 7, a driver for controlling various hardware, a program for realizing various functions, and the like.

The communication unit 33 is, for example, a NIC (Network Interface Controller), and has a function of connecting to the communication line 3. Note that the communication unit 33 may have a function of connecting to a wireless LAN (Local Area Network), a function of connecting to a wireless WAN (Wide Area Network), for example, a function of enabling short-range wireless communication such as Bluetooth (registered trademark), infrared communication, or the like, instead of the NIC or together with the NIC. The second terminal device 7 is connected to the server 2 and the like via the communication line 3, and can transmit and receive various data to and from the server 2 and the like.

The operation input unit 34 is composed of a keyboard, a mouse, and the like, and receives input of various operations by the second customer user U2 using the second terminal device 7. The display unit 35 is, for example, a liquid crystal display device or the like, and displays various images.

The control unit 31, the storage unit 32, the communication unit 33, the operation input unit 34, and the display unit 35 are electrically connected to each other via a system bus 36. Therefore, the control unit 31 can access the storage unit 32, display images on the display unit 35, grasp an operation state of the operation input unit 34 by the second customer user U2, access various communication networks and the server 2 via the communication unit 33, and the like.

### (Hardware Configuration of Management Terminal Device 10)

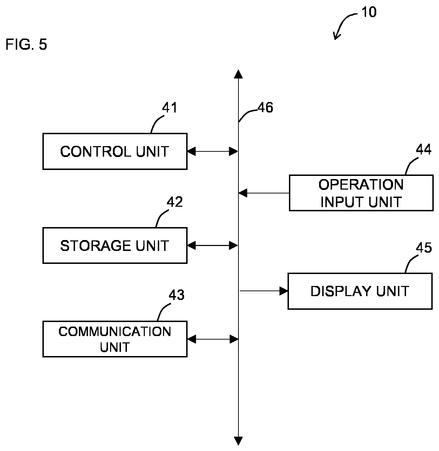

FIG. 5 is a block diagram showing a hardware configuration of the management terminal device 10 in the present embodiment. As shown in FIG. 5, the management terminal device 10 is configured to comprise a control unit 41, a storage unit 42, a communication unit 43, an operation input unit 44, and a display unit 45.

The control unit 41 is, for example, a CPU (Central Processing Unit), a microprocessor, a DSP (Digital Signal Processor), or the like, and controls the overall operation of the management terminal device 10.

A part of the storage unit 42 is composed of, for example, a RAM (Random Access Memory), a DRAM (Dynamic Random Access Memory), or the like, and is used as a work area or the like during execution of processes based on various programs by the control unit 41.

Further, a part of the storage unit 42 is, for example, a nonvolatile memory such as a ROM (Read Only Memory) or an HDD (Hard Disk Drive), and saves various data, programs used for processing of the control unit 41, and the like. The storage unit 42 is capable of holding a database including one or more tables and the like for recording various information, processing results, and the like.

The programs stored in the storage unit 42 include, for example, an OS (Operating System) for realizing basic functions of the management terminal device 10, a driver for controlling various hardware, a program for realizing various functions, and the like.

The communication unit 43 is, for example, a NIC (Network Interface Controller), and has a function of connecting to the communication line 3. Note that the communication unit 43 may have a function of connecting to a wireless LAN (Local Area Network), a function of connecting to a wireless WAN (Wide Area Network), for example, a function of enabling short-range wireless communication such as Bluetooth (registered trademark), infrared communication, or the like, instead of the NIC or together with the NIC. The management terminal device 10 is connected to the server 2 and the like via the communication line 3, and can transmit and receive various data to and from the server 2 and the like.

The operation input unit 44 is composed of a keyboard, a mouse, and the like, and receives inputs of various operations by the service providing user using the management terminal device 10. The display unit 45 is, for example, a liquid crystal display device or the like, and displays various images.

The control unit 41, the storage unit 42, the communication unit 43, the operation input unit 44, and the display unit 45 are electrically connected to each other via a system bus 46. Therefore, the control unit 41 can access the storage unit 42, display images on the display unit 45, grasp an operation state of the operation input unit 44 by the service providing user, access various communication networks and the server 2 via the communication unit 43, and the like.

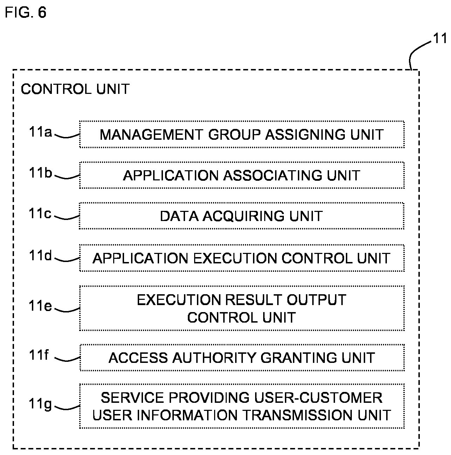

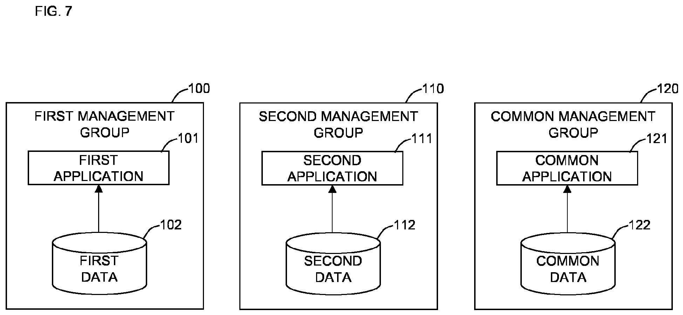

FIG. 6 is a block diagram showing an example of a functional configuration of the control unit 11 included in the server 2 in the present embodiment. FIG. 7 is a diagram showing an example of a management group in the present embodiment.

As shown in FIG. 6, the control unit 11 comprises a management group assigning unit 11a, an application associating unit 11b, a data acquiring unit 11c, an application execution control unit 11d, an execution result output control unit 11e, an access authority granting unit 11f, and a service providing user-customer user information transmission unit 11g as a functional configuration. Note that, generally, the control unit 11 of the server 2 has various functions other than those described above, but here, only characteristic functions in the service provision system 1 in the present embodiment will be described, and illustration and description of other known functions and the like will be omitted.

The management group assigning unit 11a assigns a first management group 100 to the first customer user U1 when an operation requesting to assign the first management group 100 (also referred to as a first tenant, see FIG. 7) exclusively accessible by the first customer user U1 to the first customer user U1 is received as an operation of the service providing user on the operation input unit 44 of the management terminal device 10. Here, assigning the first management group 100 to the first customer user U1 means setting the access authority of the first customer user U1 for the first management group 100 that is already created but unused and assigning the first management group 100, or creating a new first management group 100 and assigning the first management group 100 to the first customer user U1. In the present embodiment, an administrator of the first management group 100 is a provider of the facility management support service (the service providing user).

The management group assigning unit 11a assigns a second management group 110 to the second customer user U2 when an operation requesting to assign the second management group 110 (also referred to as a second tenant, see FIG. 7) exclusively accessible by the second customer user U2 to the second customer user U2 is received as an operation of the service providing user on the operation input unit 44 of the management terminal device 10. Here, assigning the second management group 110 to the second customer user U2 means setting the access authority of the second customer user U2 for the second management group 110 that is already created but unused and assigning the second management group 110, or creating a new second management group 110 and assigning the second management group 110 to the second customer user U2. In the present embodiment, an administrator of the second management group 110 is a provider of the facility management support service (the service providing user).

The management group assigning unit 11a assigns a common management group 120 to the customer user U who desires trial use of the facility management support service, when an operation requesting to assign the common management group 120 (also referred to as a demonstration management group or a common tenant, see FIG. 7) accessible by the customer user U to the customer user U is received as an operation of the service providing user on the operation input unit 44 of the management terminal device 10. Here, assigning the common management group 120 to the customer user U means setting the access authority of the customer user U for the common management group 120 that is already created but unused and assigning the common management group 120, or creating a new common management group 120 and assigning the common management group 120 to the customer user U.

Note that the management group assigning unit 11a functions as a "first management group assigning unit", a "second management group assigning unit", and a "common management group assigning unit" of the present invention.

The application associating unit 11b receives an operation of the service providing user on the operation input unit 44 of the management terminal device 10, and associates a first application 101 (see FIG. 7) generated according to an instruction from the first customer user U1 with the first management group 100. The customization request of the first customer user U1 may be made during a trial of the facility management support service in the common management group 120, or may be made after the first management group 100 is assigned to the first customer user U1. Note that the provider of the facility management support service (the service providing user) identifies data necessary for executing the first application 101, checks whether or not a sensor for acquiring the data is installed in the first plant 5, and if the sensor is not installed, provides the sensor to the first customer user U1 and proposes installation. Sensor installation proposal information related to the proposal is input to the management terminal device 10 by the provider of the facility management support service, transmitted to the server 2, associated with the first customer user U1 by the service providing user-customer user information transmission unit 11g of the server 2 (having a function of exchanging requests regarding the installation of a sensor or the customization of an application online between the service providing user and the first customer user U1), and displayed on the first terminal device 4. The sensor installation proposal information includes, for example, a type of the sensor to be installed (information indicating the type of sensor (e.g., whether it is a vibration sensor, an acoustic sensor, or a temperature sensor)), a location where the sensor needs to be installed, a recommended model number of the sensor, and the like.

The application associating unit 11b receives an operation of the service providing user on the operation input unit 44 of the management terminal device 10, and associates a second application 111 (see FIG. 7) generated according to an instruction from the second customer user U2 with the second management group 110. The customization request of the second customer user U2 may be made during a trial of the facility management support service in the common management group 120, or may be made after the second management group 110 is assigned to the second customer user U2. Note that the provider of the facility management support service (the service providing user) identifies data necessary for executing the second application 111, checks whether or not a sensor for acquiring the data is installed in the second plant 8, and if the sensor is not installed, provides the sensor to the second customer user U2 and proposes installation. Sensor installation proposal information related to the proposal is input to the management terminal device 10 by the provider of the facility management support service, transmitted to the server 2, associated with the second customer user U2 by the service providing user-customer user information transmission unit 11g of the server 2 (having a function of exchanging requests regarding the installation of a sensor or the customization of an application online between the service providing user and the second customer user U2), and displayed on the second terminal device 7. The sensor installation proposal information includes, for example, a type of the sensor to be installed (information indicating the type of sensor (e.g., whether it is a vibration sensor, an acoustic sensor, or a temperature sensor)), a location where the sensor needs to be installed, a recommended model number of the sensor, and the like.

The application associating unit 11b receives an operation of the service providing user on the operation input unit 44 of the management terminal device 10, and associates a common application 121 (also referred to as a demonstration application, see FIG. 7) accessible by the customer user U who desires trial use of the facility management support service with the common management group 120. The common application 121 is capable of executing a process related to the facility management support service (for example, state analysis processing or deterioration diagnosis processing of various equipment in a plant) based on common data stored in a common storage unit 122 (see FIG. 7; for example, a cloud database) associated with the common management group 120. The common application 121 is developed by, for example, the provider of the facility management support service (the service providing user), and can be associated with the common management group 120 after the development is completed. The common data is, for example, demonstration data related to construction, operation, or maintenance of a plant (managed facility) or a part of data of the customer user U. When data of a plurality of customer users is stored as the common data in the common storage unit 122, partitions may be provided in the common storage unit 122, and the data of the customer users may be managed for each partition, or may be stored in one database with a label for each customer user. Thereby, the customer user can perform a demonstration related to the construction, the operation, or the maintenance using data related to the managed facility of his/her own company.

Note that the application associating unit 11b functions as a "first application associating unit", a "second application associating unit", and a "common application associating unit" of the present invention.

Examples of applications provided by the service provision system 1 include an inspection management application or a facility state management application related to the managed facility of the customer user. For example, the inspection management application acquires data in which an inspection item performed by the customer user on the managed facility is associated with identification information or specification information of the facility, and further sequentially acquires an inspection history or an inspection result for the item of the inspection. Then, the inspection management application executes processing of, for example, creating an inspection report based on the acquired information, and outputs the report. For example, the facility state management application acquires detection data by the sensor set in the facility (including imaging data obtained by imaging the facility or scan data) in association with the identification information or the specification information of the facility, and based on the acquired information, executes processing of creating information visualizing a status of the managed facility or determining presence or absence of an abnormality or deterioration, and outputs these (mapping on a facility model, notification, or the like).

The data acquiring unit 11c acquires the first data related to the construction, the operation, or the maintenance of the first plant 5 managed by the first customer user U1 via, for example, a gateway (not shown) managed by the first customer user U1, and causes a first storage unit 102 (see FIG. 7; for example, a cloud database) associated with the first management group 100 to store the first data. The first application 101 is capable of executing a process related to the facility management support service (for example, the state analysis processing or the deterioration diagnosis processing of the various equipment of the first plant 5) based on the first data stored in the first storage unit 102. In the present embodiment, the first application 101 is created by customizing the common application (for example, the common application 121 deployed in the common management group 120), and is different from the common application 121 in a configuration of a display screen of an application (for example, types and arrangement of index values included in the display screen, display of a customer logo, color scheme, and the like), or setting of an anomaly threshold of a plant (for example, an index value of vibration determined to require an inspection of equipment), a location where a sensor from which detection data included in input data of the application is acquired needs to be installed and product information of the sensor, and a setting of presence or absence of an additional function in the application. The request for customizing the application may be transmitted from the first customer user U1 to the service providing user outside the present system (via telephone, e-mail, or the like), or in the present system, may be input by the first customer user U1 via the first terminal device 4, transmitted to the server 2, and transmitted to the service providing user by the service providing user-customer user information transmission unit 11g.

Note that the data acquiring unit 11c may constantly acquire the first data, or may periodically acquire the first data at a timing when the first customer user U1 uses the facility management support service. Further, the data acquiring unit 11c may acquire the first data from one first data storage unit 6, or may acquire the first data from a plurality of first data storage units 6. Further, the data acquiring unit 11c may acquire the first data triggered by storage of a new piece of first data in the first data storage unit 6 (that is, uploading thereof).

The data acquiring unit 11c acquires the second data related to the construction, the operation, or the maintenance of the second plant 8 managed by the second customer user U2 via, for example, a gateway (not shown) managed by the second customer user U2, and causes a second storage unit 112 (see FIG. 7; for example, a cloud database) associated with the second management group 110 to store the second data. The second application 111 is capable of executing a process related to the facility management support service (for example, the state analysis processing or the deterioration diagnosis processing of the various equipment of the second plant 8) based on the second data stored in the second storage unit 112. In the present embodiment, the second application 111 is created by customizing the common application (for example, the common application 121 deployed in the common management group 120), and is different from the common application 121 in a configuration of a display screen of an application (for example, types and arrangement of index values included in the display screen, display of a customer logo, color scheme, and the like), or setting of an anomaly threshold of a plant (for example, an index value of vibration determined to require an inspection of equipment), a location where a sensor from which detection data included in input data of the application is acquired needs to be installed and product information of the sensor, and a setting of presence or absence of an additional function in the application. The data acquiring unit 11c functions as the "first data acquiring unit" and the "second data acquiring unit" of the present invention. The request for customizing the application may be transmitted from the second customer user U2 to the service providing user outside the present system (via telephone, e-mail, or the like), or in the present system, may be input by the second customer user U2 via the second terminal device 7, transmitted to the server 2, and transmitted to the service providing user by the service providing user-customer user information transmission unit 11g.

Note that the data acquiring unit 11c may constantly acquire the second data, or may periodically acquire the second data at a timing when the second customer user U2 uses the facility management support service. Further, the data acquiring unit 11c may acquire the second data from one second data storage unit 9, or may acquire the second data from a plurality of second data storage units 9. Further, the data acquiring unit 11c may acquire the second data triggered by storage of a new piece of second data in the second data storage unit 9 (that is, uploading thereof).

The application execution control unit 11d controls execution of the first application 101 based on the first data stored in the first storage unit 102 in the first management group 100.

The application execution control unit 11d controls execution of the second application 111 based on the second data stored in the second storage unit 112 in the second management group 110.

The application execution control unit 11d controls execution of the common application 121 based on the common data stored in the common storage unit 122 in the common management group 120. Thereby, one or a plurality of customer users U who desire trial use of the facility management support service can experience execution of the common application 121 (that is, use of the facility management support service) using the common data. In other words, the service providing user can save the trouble of providing an execution environment of the application for each customer user U who desires trial use of the facility management support service.

After the experience, the customer user U who desires the facility management support service for production use conveys his/her wish to use an application to the service providing user. Then, the service providing user performs an operation on the operation input unit 44 of the management terminal device 10 requesting to assign a management group accessible by the customer user U who desires the facility management support service for production use to the customer user U. In the present embodiment, the first customer user U1 and the second customer user U2 who have experienced the trial use of the facility management support service convey their wishes to use the applications to the service providing user, and thereafter, the first management group 100 and the second management group 110 are assigned to the first customer user U1 and the second customer user U2, respectively.

The execution result output control unit 11e performs control to output the execution result of the first application 101 to the first terminal device 4 used by the first customer user U1. For example, the execution result output control unit 11e performs control to display the execution result of the first application 101 on the display unit 25 of the first terminal device 4. In this case, the first customer user U1 can easily grasp the execution result of the first application 101 (for example, the state analysis result or the deterioration diagnosis result of the various equipment of the first plant 5) by checking the display unit 25 of the first terminal device 4.

The execution result output control unit 11e performs control to output the execution result of the second application 111 to the second terminal device 7 used by the second customer user U2. For example, the execution result output control unit 11e performs control to display the execution result of the second application 111 on the display unit 35 of the second terminal device 7. In this case, the second customer user U2 can easily grasp the execution result of the second application 111 (for example, the state analysis result or the deterioration diagnosis result of the various equipment of the second plant 8) by checking the display unit 35 of the second terminal device 7.

Note that the execution result output control unit 11e functions as the "first output unit" and the "second output unit" of the present invention.

The access authority granting unit 11f grants the access authority of the first customer user U1 to the first management group 100, the first application 101, or the first data stored in the first storage unit 102 based on the instruction from the provider of the facility management support service (the service providing user). Specifically, the access authority granting unit 11f grants the access authority corresponding to the security label set for each type of the first data or each type of the execution result of the first application 101 to the first customer user U1. Note that the access authority granting unit 11f functions as the "first access authority granting unit" of the present invention.

The security label is set, for example, corresponding to an area of the first managed facility related to the first data or the execution result of the first application, or corresponding to work details of construction, operation, or maintenance. Here, examples of a configuration for granting the first customer user U1 access authority corresponding to a security label set for each type of the first data (for example, an area in the first plant 5 or a parameter of the first data) include: a configuration for granting access authority corresponding to a security label set for each area to a user in charge of each area of the first plant 5 (for example, a distillation facility area, a decomposition treatment area, or a utility facility area); and a configuration for granting access authority corresponding to a security label set according to assigned tasks, to the first customer user U1 corresponding to their assigned tasks. For example, an operating user of equipment is granted access authority to information regarding the internal temperature, internal pressure, and content concentration of the equipment, and the acceptability of an operating state analyzed by the first application 101 based on these, while a user in charge of maintenance of the equipment is granted access authority to information regarding a vibration value of the equipment and deterioration of the equipment based on these, or information regarding an inspection record. Furthermore, examples of a configuration for granting the first customer user U1 access authority corresponding to a security label set for each execution result of the first application 101 include: a configuration for granting access authority corresponding to a security label set for each area to a user in charge of each area of the first plant 5 (for example, a distillation facility area, a decomposition treatment area, or a utility facility area); and a configuration for granting access authority corresponding to a security label set according to assigned tasks, to the first customer user U1 corresponding to their assigned tasks. For example, a user at a management level or a supervisor level of the first plant 5 is granted access authority to information affecting profit from production activities in the first plant 5, while a user at an operator level of the first plant 5 is granted access authority to information regarding on-site operation of the first plant 5.

The access authority granting unit 11f grants the access authority of the second customer user U2 to the second management group 110, the second application 111, or the second data stored in the second storage unit 112 based on the instruction from the provider of the facility management support service (the service providing user). Specifically, the access authority granting unit 11f grants the access authority corresponding to a security label set for each type of the second data or each type of an execution result of the second application 111 to the second customer user U2.

Here, examples of a configuration for granting the second customer user U2 access authority corresponding to a security label set for each type of the second data (for example, an area in the second plant 8 or a parameter of the second data) include: a configuration for granting access authority corresponding to a security label set for each area to a user in charge of each area of the second plant 8 (for example, a distillation facility area, a decomposition treatment area, or a utility facility area); and a configuration for granting access authority corresponding to a security label set according to assigned tasks, to the second customer user U2 corresponding to their assigned tasks. For example, an operating user of equipment is granted access authority to information regarding the internal temperature, internal pressure, and content concentration of the equipment, and the acceptability of an operating state analyzed by the second application 111 based on these, while a user in charge of maintenance of the equipment is granted access authority to information regarding a vibration value of the equipment and deterioration of the equipment based on these, or information regarding an inspection record. Furthermore, examples of a configuration for granting the second customer user U2 access authority corresponding to a security label set for each execution result of the second application 111 include: a configuration for granting access authority corresponding to a security label set for each area to a user in charge of each area of the second plant 8 (for example, a distillation facility area, a decomposition treatment area, or a utility facility area); and a configuration for granting access authority corresponding to a security label set according to assigned tasks, to the second customer user U2 corresponding to their assigned tasks. For example, a user at a management level or a supervisor level of the second plant 8 is granted access authority to information affecting profit from production activities in the second plant 8, while a user at an operator level of the second plant 8 is granted access authority to information regarding on-site operation of the second plant 8.

### (Common Management Group Assigning Processing)

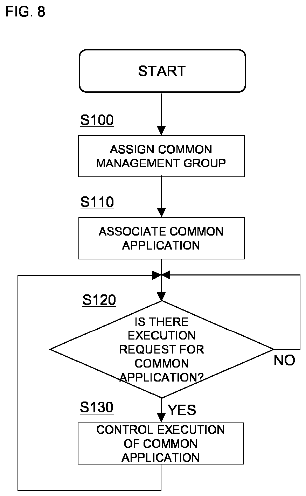

FIG. 8 is a flowchart showing an example of common management group assigning processing performed by the server 2 in the present embodiment.

First, the management group assigning unit 11a receives an operation requesting to assign the common management group 120 accessible by the customer user U to the customer user U as an operation of the service providing user on the operation input unit 44 of the management terminal device 10, and assigns the common management group 120 to the customer user U (step S100).

Next, the application associating unit 11b receives an operation of the service providing user on the operation input unit 44 of the management terminal device 10, and associates the common application 121 accessible by the customer user U with the common management group 120 (step S110).

Next, the application execution control unit 11d determines whether or not an execution request for the common application 121 is generated from the customer user U accessible to the common application 121 (step S120). As a result of determination, when the execution request for the common application 121 is not generated (step S120, NO), the process returns to step S120.

On the other hand, when the execution request for the common application 121 is generated (step S120, YES), the application execution control unit 11d controls execution of the common application 121 based on the common data stored in the common storage unit 122 in the common management group 120 (step S130). Upon completion of the process of step S130, the process returns to step S120.

### (First Management Group Assigning Processing)

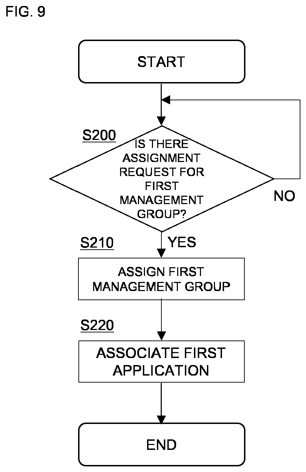

FIG. 9 is a flowchart showing an example of first management group assigning processing performed by the server 2 in the present embodiment.

First, the management group assigning unit 11a determines whether or not an operation requesting to assign the first management group 100 to the first customer user U1 is received as an operation of the service providing user on the operation input unit 44 of the management terminal device 10 (step S200). As a result of determination, when the operation requesting to assign the first management group 100 to the first customer user U1 is not received (step S200, NO), the process returns to step S200.

On the other hand, when the operation requesting to assign the first management group 100 to the first customer user U1 is received (step S200, YES), the management group assigning unit 11a assigns the first management group 100 to the first customer user U1 (step S210).

Finally, the application associating unit 11b receives an operation of the service providing user on the operation input unit 44 of the management terminal device 10, and associates the first application 101 generated according to an instruction from the first customer user U1 with the first management group 100 (step S220). Upon completion of the process of step S220, the server 2 ends the first management group assigning processing shown in FIG. 9.

### (Second Management Group Assigning Processing)

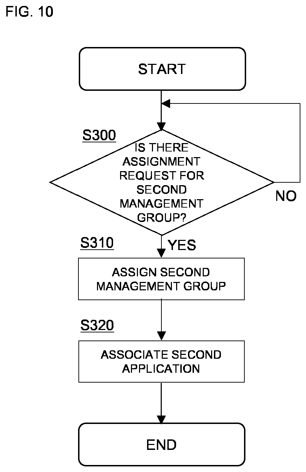

FIG. 10 is a flowchart showing an example of second management group assigning processing performed by the server 2 in the present embodiment.

First, the management group assigning unit 11a determines whether or not an operation requesting to assign the second management group 110 to the second customer user U2 is received as an operation of the service providing user on the operation input unit 44 of the management terminal device 10 (step S300). As a result of determination, when the operation requesting to assign the second management group 110 to the second customer user U2 is not received (step S300, NO), the process returns to step S300.

On the other hand, when the operation requesting to assign the second management group 110 to the second customer user U2 is received (step S300, YES), the management group assigning unit 11a assigns the second management group 110 to the second customer user U2 (step S310).

Finally, the application associating unit 11b receives an operation of the service providing user on the operation input unit 44 of the management terminal device 10, and associates the second application 111 generated according to an instruction from the second customer user U2 with the second management group 110 (step S320). Upon completion of the process of step S320, the server 2 ends the second management group assigning processing shown in FIG. 10.

### (First Application Execution Processing)

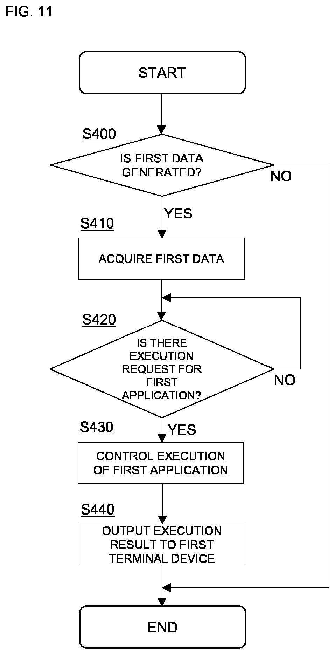

FIG. 11 is a flowchart showing an example of first application execution processing performed by the server 2 in the present embodiment.

First, the data acquiring unit 11c refers to the first data storage unit 6, and determines whether or not the first data related to the construction, the operation, or the maintenance of the first plant 5 managed by the first customer user U1 is newly generated (that is, stored) (step S400). As a result of determination, when the first data related to the construction, the operation, or the maintenance of the first plant 5 is not newly generated (step S400, NO), the server 2 ends the first application execution processing shown in FIG. 11.

On the other hand, when the first data related to the construction, the operation, or the maintenance of the first plant 5 is newly generated (step S400, YES), the data acquiring unit 11c acquires the first data and causes the first storage unit 102 associated with the first management group 100 to store the first data (step S410).

Next, the application execution control unit 11d determines whether or not an operation requesting to control execution of the first application 101 based on the first data stored in the first storage unit 102 is received as an operation of the service providing user on the operation input unit 44 of the management terminal device 10 (step S420). As a result of determination, when the operation requesting to control the execution of the first application 101 is not received (step S420, NO), the process returns to step S420.

On the other hand, when the operation requesting to control the execution of the first application 101 is received (step S420, YES), the application execution control unit 11d controls the execution of the first application 101 based on the first data stored in the first storage unit 102 in the first management group 100 (step S430).

Finally, the execution result output control unit 11e performs control to output the execution result of the first application 101 in step S430 to the first terminal device 4 used by the first customer user U1 (step S440). Upon completion of the process of step S440, the server 2 ends the first application execution processing shown in FIG. 11.

### (Second Application Execution Processing)

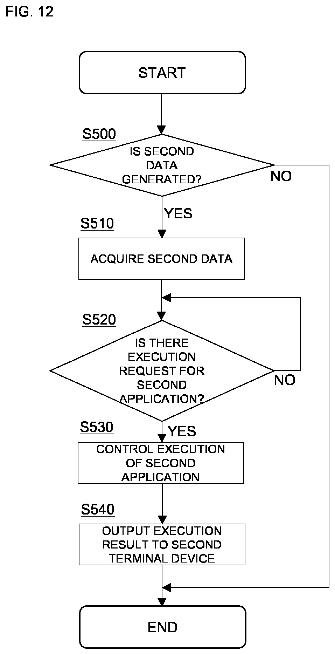

FIG. 12 is a flowchart showing an example of second application execution processing performed by the server 2 in the present embodiment.

First, the data acquiring unit 11c refers to the second data storage unit 9, and determines whether or not the second data related to the construction, the operation, or the maintenance of the second plant 8 managed by the second customer user U2 is newly generated (that is, stored) (step S500). As a result of determination, when the second data related to the construction, the operation, or the maintenance of the second plant 8 is not newly generated (step S500, NO), the server 2 ends the second application execution processing shown in FIG. 12.

On the other hand, when the second data related to the construction, the operation, or the maintenance of the second plant 8 is newly generated (step S500, YES), the data acquiring unit 11c acquires the second data and causes the second storage unit 112 associated with the second management group 110 to store the second data (step S510).

Next, the application execution control unit 11d determines whether or not an operation requesting to control execution of the second application 111 based on the second data stored in the second storage unit 112 is received as an operation of the service providing user on the operation input unit 44 of the management terminal device 10 (step S520). As a result of determination, when the operation requesting to control the execution of the second application 111 is not received (step S520, NO), the process returns to step S520.

On the other hand, when the operation requesting to control the execution of the second application 111 is received (step S520, YES), the application execution control unit 11d controls the execution of the second application 111 based on the second data stored in the second storage unit 112 in the second management group 110 (step S530).

Finally, the execution result output control unit 11e performs control to output the execution result of the second application 111 in step S530 to the second terminal device 7 used by the second customer user U2 (step S540). Upon completion of the process of step S540, the server 2 ends the second application execution processing shown in FIG. 12.

### (Effects of Present Embodiment)

As described in detail above, in the present embodiment, the service provision system 1 comprises: the first management group assigning unit (the management group assigning unit 11a) that assigns the first management group 100 accessible by the first customer user U1 to the first customer user; the second management group assigning unit (the management group assigning unit 11a) that assigns the second management group 110 accessible by the second customer user U2 to the second customer user U2; the first application associating unit (the application associating unit 11b) that associates the first application 101 generated according to the instruction from the first customer user U1 with the first management group 100; the second application associating unit (the application associating unit 11b) that associates the second application 111 generated according to the instruction from the second customer user U2 with the second management group 110; the first data acquiring unit (the data acquiring unit 11c) that acquires the first data related to the construction, the operation, or the maintenance of the first managed facility (the first plant 5) managed by the first customer user U1, and causes the first storage unit 102 associated with the first management group 100 to store the first data; and the second data acquiring unit (the data acquiring unit 11c) that acquires the second data related to the construction, the operation, or the maintenance of the second managed facility (the second plant 8) managed by the second customer user U2, and causes the second storage unit 112 associated with the second management group 110 to store the second data. The first application 101 is capable of executing a process related to the facility management support service based on the first data stored in the first storage unit 102, and the second application 111 is capable of executing a process related to the facility management support service based on the second data stored in the second storage unit 112.

According to the present embodiment configured as described above, the first application 101 generated according to the instruction from the first customer user U1 is associated with the first management group 100, and the second application 111 generated according to the instruction from the second customer user U2 is associated with the second management group 110, so that an application can be customized for each customer user U. Further, the first data related to the construction, the operation, or the maintenance of the first managed facility (the first plant 5) managed by the first customer user U1 is stored in the first storage unit 102 associated with the first management group 100, and the second data related to the construction, the operation, or the maintenance of the second managed facility (the second plant 8) managed by the second customer user U2 is stored in the second storage unit 112 associated with the second management group 110, so that it is possible to prevent occurrence of leakage of such data as a result of mixing of a plurality of pieces of data related to facilities (plants) respectively managed by the plurality of customer users U due to the provider of the service incorrectly linking customer data or the like. From the above, it is possible to solve a problem of the prior art caused by the plurality of customer users U belonging to one management group.

### (Modification)

Note that, in the above embodiment, the data acquiring unit 11c may acquire, as the first data, only data necessary for executing the first application 101 among data that is related to the construction, the operation, or the maintenance of the first plant 5 (the first managed facility) and that is stored in the first data storage unit 6 managed by the first customer user U1. Thereby, compared to a case where data unnecessary for the execution of the first application 101 is also acquired as the first data, an acquisition time of the first data by the data acquiring unit 11c can be shortened, and a capacity of the first data stored in the first storage unit 102 associated with the first management group 100 can be reduced.

Further, in the above embodiment, the data acquiring unit 11c may acquire, as the second data, only data necessary for executing the second application 111 among data that is related to the construction, the operation, or the maintenance of the second plant 8 (the second managed facility) and that is stored in the second data storage unit 9 managed by the second customer user U2. Thereby, compared to a case where data unnecessary for the execution of the second application 111 is also acquired as the second data, an acquisition time of the second data by the data acquiring unit 11c can be shortened, and a capacity of the second data stored in the second storage unit 112 associated with the second management group 110 can be reduced.

Further, in the above embodiment, the application associating unit 11b may associate a plurality of applications including the first application 101 with the first management group 100. In this case, the access authority granting unit 11f may grant the access authority of the first customer user U1 to only a part of applications among the plurality of applications associated with the first management group 100.

Further, in the above embodiment, the application associating unit 11b may associate a plurality of applications including the second application 111 with the second management group 110. In this case, the access authority granting unit 11f may grant the access authority of the second customer user U2 to only a part of applications among the plurality of applications associated with the second management group 110.

Further, in the above embodiment, the first customer user U1 may invite users of other companies (for example, an inspection company, a turnaround maintenance contractor, or the like) to the first management group 100 to share the first data stored in the first storage unit 102. In this case, the first customer user U1 requests the provider of the facility management support service (the service providing user) to grant access authority to users of other companies, and the service providing user performs a setting operation for granting the access authority to the users of other companies. A range of the access authority granted to the users of other companies is set by the service providing user. The access authority is set according to a security label set for each area and/or a security label set for work details of construction, operation, or maintenance, and for example, the service providing user performs a setting to grant access authority only to facility data regarding an area A to a user of a construction company in charge of the area A in the first plant 5. Similarly, the second customer user U2 may invite users of other companies to the second management group 110 to share the second data stored in the second storage unit 112.

Further, all of the above embodiments merely show examples of materialization in carrying out the present invention, and the technical scope of the present invention should not be interpreted restrictively thereby. That is, the present invention can be carried out in various forms without departing from the gist or principal features thereof.

### Reference Signs List

1: service provision system, 2: server, 3: communication line, 4: first terminal device, 5: first plant, 6: first data storage unit, 7: second terminal device, 8: second plant, 9: second data storage unit, 10: management terminal device, 11, 21, 31, 41: control unit, 11a: management group assigning unit, 11b: application associating unit, 11c: data acquiring unit, 11d: application execution control unit, 11e: execution result output control unit, 11f: access authority granting unit, 11g: service providing user-customer user information transmission unit, 12, 22, 32, 42: storage unit, 13, 23, 33, 43: communication unit, 14, 24, 34, 44: operation input unit, 15, 25, 35, 45: display unit, 16, 26, 36, 46: system bus, 100: first management group, 101: first application, 102: first storage unit, 110: second management group, 111: second application, 112: second storage unit, 120: common management group, 121: common application, 122: common storage

## Claims

1. A service provision system that provides a facility management support service to a customer user, comprising:
a first management group assigning unit that assigns a first management group accessible by a first customer user to the first customer user;
a second management group assigning unit that assigns a second management group accessible by a second customer user to the second customer user;
a first application associating unit that associates a first application generated according to an instruction from the first customer user with the first management group;
a second application associating unit that associates a second application generated according to an instruction from the second customer user with the second management group;
a first data acquiring unit that acquires first data related to construction, operation, or maintenance of a first managed facility managed by the first customer user, and causes a first storage unit associated with the first management group to store the first data; and
a second data acquiring unit that acquires second data related to construction, operation, or maintenance of a second managed facility managed by the second customer user, and causes a second storage unit associated with the second management group to store the second data, wherein
the first application is capable of executing a process related to the facility management support service based on the first data stored in the first storage unit, and
the second application is capable of executing a process related to the facility management support service based on the second data stored in the second storage unit.

2. The service provision system according to claim 1, further comprising:
a common management group assigning unit that assigns a common management group accessible by the customer user to the customer user; and
a common application associating unit that associates a common application accessible by the customer user with the common management group, wherein
the common application is capable of executing a process related to the facility management support service based on data related to construction, operation, or maintenance of a managed facility.

3. The service provision system according to claim 2, wherein
the first application is different from the common application in a configuration of a display screen of an application or setting of an anomaly threshold of the managed facility.

4. The service provision system according to claim 1, wherein
administrators of the first and second management groups are providers of the facility management support service.

5. The service provision system according to claim 4, further comprising:
a first access authority granting unit that grants the first customer user access authority to the first management group, the first application, or the first data based on an instruction from the provider of the facility management support service, wherein
the first access authority granting unit grants the access authority corresponding to a security label set for each type of the first data or each type of an execution result of the first application to the first customer user.

6. The service provision system according to claim 5, wherein
the security label is set corresponding to an area of the first managed facility related to the first data or the execution result of the first application, or corresponding to work details of construction, operation, or maintenance.

7. The service provision system according to claim 1, further comprising:
a first output unit that outputs an execution result of the first application to a first terminal device used by the first customer user; and
a second output unit that outputs an execution result of the second application to a second terminal device used by the second customer user.

8. The service provision system according to claim 1, wherein
the first data acquiring unit acquires, as the first data, only data necessary for executing the first application among data that is related to construction, operation, or maintenance of the first managed facility and that is stored in a first data storage unit managed by the first customer user.

9. A service provision method for providing a facility management support service to a customer user, comprising:
assigning a first management group accessible by a first customer user to the first customer user;
assigning a second management group accessible by a second customer user to the second customer user;
associating a first application generated according to an instruction from the first customer user with the first management group;
associating a second application generated according to an instruction from the second customer user with the second management group;
acquiring first data related to construction, operation, or maintenance of a first managed facility managed by the first customer user, and causing a first storage unit associated with the first management group to store the first data;
acquiring second data related to construction, operation, or maintenance of a second managed facility managed by the second customer user, and causing a second storage unit associated with the second management group to store the second data, wherein
the first application is capable of executing a process related to the facility management support service based on the first data stored in the first storage unit, and
the second application is capable of executing a process related to the facility management support service based on the second data stored in the second storage unit.
